# EUROPEAN PATENT SPECIFICATION

(11) **EP 4 310 317 B1**
(45) Date of publication and mention of the grant of the patent: **02.07.2025**
(21) Application number: 23184819.3
(22) Date of filing: 11.07.2023
(51) Int. Cl.: F03B 13/06, F03B 15/00

(54) **VARIABLE SPEED RECONFIGURABLE PUMP/TURBINE CLUSTERS**
REKONFIGURIERBARE PUMPEN-/TURBINENCLUSTER MIT VARIABLER GESCHWINDIGKEIT
GROUPES POMPE/TURBINE RECONFIGURABLES À VITESSE VARIABLE

(30) Priority: 13.07.2022 US 202217863591
(43) Date of publication of application: 24.01.2024
(73) Proprietor: Flowserve Pte. Ltd., Singapore 637345 (SG)
(72) Inventor: Dreiss, Andreas, Geestland (DE); O'Sullivan, Mark, Phillipsburg, NJ (US); Judge, Scott C., Bethlehem, PA (US); Morrison, Gregory, Nazareth, PA (US)
(74) Representative: Petraz, Gilberto Luigi

(56) References cited:
- WO-A1-2017/097378
- CN-A- 111 720 253
- US-A1- 2015 260 151
- US-A1- 2018 313 324
- US-B1- 10 865 762

## Description

### FIELD OF THE INVENTION

The invention relates to pumps and turbines, and more particularly, to pumps and turbines that are required to maintain high efficiency over a wide range of conditions of service.

### BACKGROUND OF THE INVENTION

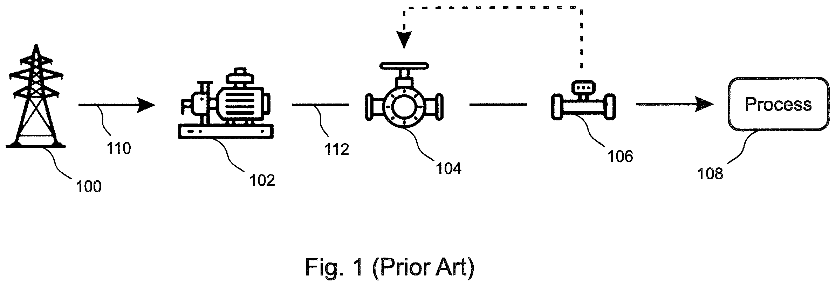

With reference to Fig. 1, pumps **102,** turbines, and combination pump-turbines, referred to herein generically as "hydraulic rotating machinery" or "HRM," are traditionally operated at a fixed rotating speed, which is determined by the driving motor type and/or by the frequency of the power **110** derived from the electrical supply net 100. While an HRM can have a relatively wide condition of service ("COS") range over which it can be operated, optimal efficiency is typically realized only when the COS is a close match to the "best efficiency point" or BEP of the HRM, which is typically defined in terms of specified ranges of flow rate, flow volume, inlet and outlet pressure, inlet and outlet temperature, and sometimes also gas fraction and solid/liquid fraction, among other conditions.

If the COS that is demanded by a process **108** deviates too far from the BEP of the HRM, the HRM will run at a much lower hydraulic efficiency. Also, an HRM can sometimes be subject to increased wear and reduced operating life when the COS is far from the BEP, due to resulting forces such as bearing loads and vibration levels. In addition, the only way to control the hydraulic output **112** of such fixed speed HRMs is to use throttle valves **104,** controlled for example by the measurements of a flow rate sensor **106,** which introduces further energy losses.

One approach to maintaining HRM efficiency over wider COS ranges is to implement an HRM that can be driven at variable speeds. By changing the operating speed of a variable speed HRM, the BEP of the HRM can be shifted so that it remains close to a varying COS, thereby optimizing the overall efficiency of the process to which the HRM is applied. However, this approach can still be insufficient for some applications that require efficient operation over a very wide COS range.

Technologies for green energy storage and recovery can require the operation of HRMs over especially wide COS ranges. HRMs are typically used in these technologies both to store energy (pumping mode) and recover the energy (turbine mode). For example, excess energy can be used to pump water from a low-lying reservoir to an elevated reservoir during times of low energy demand, and then turbines can be used to recapture the energy as the water is allowed to flow from the elevated reservoir back to the low-lying reservoir during periods of high energy demand.

Similarly, HRMs can be used to pressurize and/or liquify a gas within a storage container during times when excess energy is available, and then the stored gas can be allowed to vaporize and/or expand during periods of high energy demand so that it can be used to operate a turbine. For example, energy can be stored by compressing carbon dioxide into a supercritical liquid state within a holding tank, and then vaporizing the carbon dioxide and directing the resulting gas through a turbine to recover the saved energy.

As another example, HRMs can be used to drive heat pump cycles that store energy by heating or cooling a thermal storage medium. In each case, a separate pump and turbine can be implemented, or a dual mode pump/turbine HRM can be used to meet the requirements of both the energy storage cycle and the energy recovery cycle of an energy storage system.

The full cycle of energy storage and subsequent energy recovery in such systems is referred to as the "round trip," and the efficiency of the round trip is called the "round trip efficiency" or "RTE." The RTE is defined as the ratio of the energy which can be recovered by the energy storage process, divided by the energy that was required to store the same energy. For example, if 100 MWH are used to store energy, and 80 MWh can be recovered from the stored energy as usable energy, the RTE is 80MWh / 100MWh * 100% = 80%. The optimization of the RTE is extremely important for the economics of any given energy storage and recovery process, including green energy systems that require HRM operation over wide COS ranges.

Document US 2015/260151 A1 discloses a system for controlling water turbine generator for waterworks. Document US 2018/313324 A1 discloses a stepwise operating parallel type small hydro power generation system having fixed flow path.

What is needed, therefore, is an HRM solution that can provide optimal hydraulic energy efficiency over a very wide COS range.

### SUMMARY OF THE INVENTION

The present invention is a "hydraulic rotating machinery" ("HRM") system according to the related appended claims, that can provide optimal hydraulic energy efficiency over a very wide condition of service ("COS") range. In energy storage embodiments, the invention provides maximal round-trip efficiency ("RTE") for energy storage and recovery.

The invention comprises a plurality, or "cluster," of variable speed HRMs having operating speeds that are independently controlled by an HRM controller. The HRMs in the cluster are interconnected with each other by an HRM plumbing system that includes an inlet, an outlet, and one or more valves that can be actuated by the HRM controller to configure a flow path through which a process fluid flows from the inlet to the outlet via one or more of the HRMs in the cluster. By actively selecting the HRMs that are included in the flow path, the interconnections therebetween, and the operating speeds thereof, the HRM controller is able to ensure that the HRM cluster continues to operate at optimal efficiency as the COS fluctuates over a very wide range.

The following is a very simple example directed to a hypothetical HRM cluster comprising two identical, variable speed pumps, where the HRM cluster is used to store energy resulting from excess capacity of a green energy source by compressing a gas into a storage container. In this example, the operating speed of each of the pumps can be varied so as to maintain optimal efficiency when the volumetric flow rate through the pump is between 51 and 85 m³/h (30 and 50 cubic feet per minute (cfm)), and the output pressure is between 0 and 2,75 bar (0 and 40 psi) higher than the input pressure. As the process begins, the HRM controller has the option of either bypassing one of the pumps and adjusting the speed of the other pump to deliver gas to the storage container at 51-85 m³/h (30-50 cfm), or connecting the two pumps in parallel to deliver the gas to the storage container at a flow rate of 102-170 m³/h (60-100 cfm). The choice between these two options may depend, for example, on the amount of excess energy that is currently available from the green energy system.

Once the pressure in the storage container reaches 2,75 bar (40 psi), the HRM controller reconfigures the pumps into a series configuration, and adjusts their operating speeds such that they are each efficiently pumping between 51 and 85 m³/h (30 and 50 cfm) over a pressure differential of 1,37 bar (20 psi) per pump. As the pressure within the storage container continues to rise above 2,75 bar (40 psi), the operating speeds of the two pumps are varied so as to maintain optimum energy efficiency. In this series configuration, by controlling the operating speeds of the pumps, optimal hydraulic efficiency of the HRM cluster can be maintained up to a maximum of 2,75 bar (40 psi) per pump, i.e. 5,5 bar (80 psi) total.

This approach can be extended to clusters of more than two pumps as needed. For example, a cluster that includes four identical pumps as described above could be configured by an HRM controller to be entirely in parallel for container pressures up to 2,75 bar (40 psi), in a series/parallel arrangement from 2,75 to 5,5 bar (40 to 80 psi), and all in series for pressures from 5,5 to 11 bar (80 to 160 psi), where the operating rates of the HRMs would be adjusted as needed such that each of the pumps operates at or near its BEP over this entire range. In the same way, this approach can be extended to clusters that include any combination of pumps, turbines, and/or hybrid pump/turbine HRMs ("hybrid" HRMs).

In some embodiments, the cluster includes only one type of HRM, for example one type of pump for clusters that are used only for pumping fluids, only one type of turbine for clusters that are used only for generating turboelectric energy, or only one type of hybrid HRM for clusters that are used both for pumping fluids and for generating turboelectric energy. In similar embodiments, the cluster includes a limited range of HRM types, such as a plurality of identical pumps and a plurality of identical turbines.

Limiting the number of different types of HRM that are included in a cluster can simplify the support and maintenance of the cluster and reduces costs, because only a relatively small inventory of "spare" HRMs is required to enable failed units in the cluster to be quickly replaced. This approach also enables the cluster to be readily expanded as needed, simply by adding additional HRMs from inventory to the cluster, and making corresponding extensions to the HRM plumbing system and controller, thereby enabling the cluster to be readily adapted to changing requirements of the process.

Other embodiments include HRM clusters comprising a plurality of different types of pumps, turbines, and/or hybrid HRMs having different BEPs, as well as HRMs that can tolerate different gas fractions and/or solid/liquid ratios. This approach can reduce the number of HRMs that are required to enable the cluster to maintain optimal energy efficiency over a wide range of COS. For example, if the process fluid is normally a liquid, but sometimes also includes gas and/or solids, then an HRM cluster might include at least one pump that is optimized for pumping a pure liquid and another pump that is optimized for pumping a hybrid fluid that includes gas and/or solids mixed with a liquid.

According to the present invention, the controller adjusts the operating speeds and interconnections of the HRMs based upon information received from one or more information sources. The information can include, for example, the energy status at any given time of a green energy source such as a solar panel or wind turbine, i.e. how much excess energy is available to be stored, or how much previously stored energy is currently needed. The information can also include sensed information regarding energy being consumed by pumps and/or generated by turbines in the cluster, as well as various process fluid parameters, such as pressures, volumetric flow rates, mass flow rates, geodetic fluid levels, static and dynamic fluid levels, static and dynamic fluid energies, fluid temperatures, fluid densities, fluid phases (gas, liquified, supercritical, solidified), amounts of solids and/or suspensions present in the fluid, gas fractions, and/or solid/liquid ratios, among others.

The HRM controller applies a process-dependent algorithm to these inputs so as to determine which of the HRMs in the cluster should be included in the flow path, how they should be interconnected, and at what speed each of the HRMs should be operated, thereby ensuring that each of the HRMs in the flow path continues to operate at or near its "best efficiency point" (BEP) as the conditions of service vary over a wide range.

In embodiments, the HRM controller also monitors the health of the HRMs in the clusters, for example by monitoring bearing temperatures, noise levels, vibrations, wear rates, and component deflections. The HRM controller is thereby able to predict when an HRM is nearing failure and should be repaired or replaced. Similarly, in various embodiments the HRM controller monitors the health of the overall process with which the HRM cluster is associated, for example detecting leaks and other problems by monitoring pressures, temperatures, and/or flow rates at various points in the process.

One general aspect of the present invention is a hydraulic rotating machinery (HRM) system that is configured to control a process fluid of a process, said process fluid having widely varying conditions of service (COS). The HRM system includes a controller, an HRM cluster comprising a plurality of HRMs having variable operating speeds, each of the HRMs being a pump, a turbine, or a hybrid pump/turbine, the operating speeds of the HRMs being controlled by the controller, an HRM plumbing system, the HRMs being interconnectable by the HRM plumbing system to form a flow path through which the process fluid can flow from an inlet of the HRM plumbing system to an outlet of the HRM plumbing system, a plurality of valves included in the HRM plumbing system, the controller being able to actuate the valves so as to control a selection of the HRMs that are included in the flow path and an arrangement in which the HRMs of the selection are included in the flow path, and non-transient media cooperative with the controller.

The non-transient media contains instructions that, when executed by the controller, cause the controller to accept information regarding at least one of a status of the process and the COS of the process fluid, and according to said information, control the operating speeds of the HRMs and the selection and arrangement of the HRMs in the flow path so as to continuously satisfy at least one requirement of the process while ensuring that the HRMs in the flow path operate substantially at their optimal hydraulic efficiency points over said widely varying COS of the process fluid.

In embodiments, all of the HRMs in the plurality of HRMs are identical to each other.

In any of the above embodiments, the plurality of HRMs can include pumps and turbines, all of the pumps in the plurality of HRMs being identical to each other, and all of the turbines in the plurality of HRMs being identical to each other.

In any of the above embodiments, the controller can be able to change the configuration of the flow path such that an interconnection of a pair of the HRMs in the flow path is changed between a parallel interconnection and a serial interconnection.

In any of the above embodiments, the controller can be able to change the configuration of the flow path such that an interconnection between four of the HRMs in the cluster is changed between a fully parallel interconnection, a series-parallel interconnection, and a fully series interconnection.

In any of the above embodiments, the process can be an energy generating process, and the HRM system can be configured to store a surplus energy output of the process when the process is subject to a low energy demand, and to recover said stored energy and supply the recovered energy to the process when the process is subject to a high energy demand.

In any of the above embodiments, the cluster can include at least one HRM that is configured for efficient operation upon a process fluid that is a mixture of a liquid and a gas.

In any of the above embodiments, the cluster can include at least one HRM that is configured for efficient operation upon a process fluid that is a liquid mixed with solids.

In any of the above embodiments, the cluster can include a first pump having first operating characteristics and a second pump having second operating characteristics that are distinct from the first operating characteristics.

In any of the above embodiments, the cluster includes a first turbine having first operating characteristics and a second turbine having second operating characteristics that are distinct from the first operating characteristics.

In any of the above embodiments, the cluster can include a first hybrid pump/turbine having first operating characteristics and a second hybrid pump/turbine having second operating characteristics that are distinct from the first operating characteristics.

In any of the above embodiments, the information received by the controller can include information pertaining to an operating health of an HRM in the cluster, and wherein the instructions, when executed by the controller, further cause the controller to predict a time until failure of the HRM.

A second general aspect of the present invention is a method of efficiently controlling a process fluid of a process according to the related appended claim, said process fluid having widely varying conditions of service (COS). The method includes providing a controller, providing a plurality of HRMs having variable operating speeds, each of the HRMs being a pump, a turbine, or a hybrid pump/turbine, interconnecting the HRMs via an HRM plumbing system to form an HRM cluster, the HRM plumbing system comprising a plurality of valves, controlling of the valves by the controller so as to configure a flow path through which the process fluid can flow from an inlet of the HRM plumbing system to an outlet of the HRM plumbing system, said flow path comprising a selection of the HRMs of the cluster arranged in an HRM arrangement, causing the process fluid to flow through the flow path, receiving by the controller of information regarding at least one of a status of the process and the COS of the process fluid, and according to said information, controlling by the controller of the operating speeds of the HRMs and the selection and arrangement of the HRMs in the flow path so as to continuously satisfy at least one requirement of the process while ensuring that the HRMs in the flow path operate substantially at their optimal hydraulic efficiency points over said widely varying COS of the process fluid.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1 illustrates control of a process fluid by an HRM in an example of the prior art;
Fig. 2 illustrates an embodiment of the present invention in which an HRM cluster stores and then retrieves energy in support of a green energy system;
Fig. 3A illustrates an HRM cluster comprising two HRMs, where the HRMs are connected in parallel by the HRM plumbing system according to an embodiment of the present invention;
Fig. 3B illustrates an HRM cluster comprising two HRMs, where the HRMs are connected in series by the HRM plumbing system;
Fig. 4A is a block diagram of an HRM cluster comprising four HRMs, where the HRMs are connected in parallel by the HRM plumbing system according to an embodiment of the present invention;
Fig. 4B is a simplified block diagram of the cluster of Fig. 4A, showing the flow path through the cluster;
Fig. 4C is a block diagram of an HRM cluster comprising four HRMs, where the HRMs are connected in a series-parallel arrangement by the HRM plumbing system according to an embodiment of the present invention;
Fig. 4D is a simplified block diagram of the cluster of Fig. 4C, showing the flow path through the cluster;
Fig. 4E is a block diagram of an HRM cluster comprising four HRMs, where the HRMs are connected in series by the HRM plumbing system according to an embodiment of the present invention;
Fig. 4F is a simplified block diagram of the cluster of Fig. 4E, showing the flow path through the cluster; and
Fig. 5 is a block diagram that illustrates an exchange of information between a controller and an HRM cluster, a process, and a green energy system;

### DETAILED DESCRIPTION

The present invention is a "hydraulic rotating machinery" ("HRM") system that can provide high energy efficiency over a very wide condition of service ("COS") range. In energy storage embodiments, the invention provides maximal round-trip efficiency ("RTE") for energy storage and recovery.

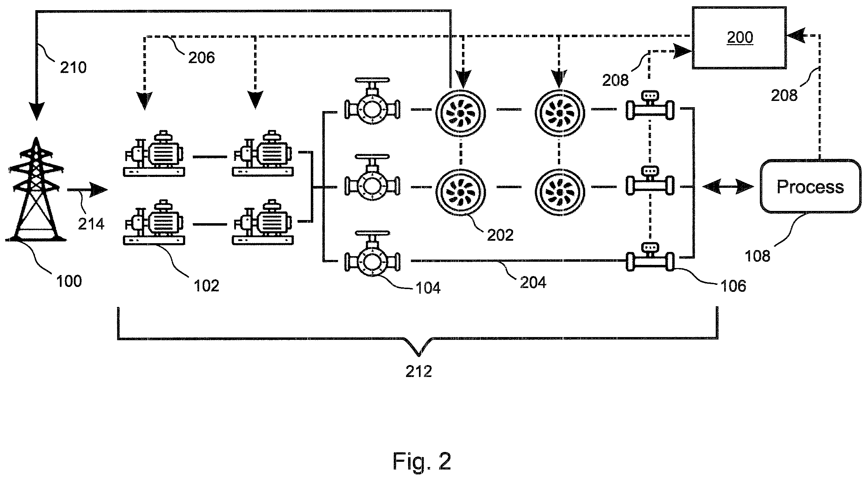

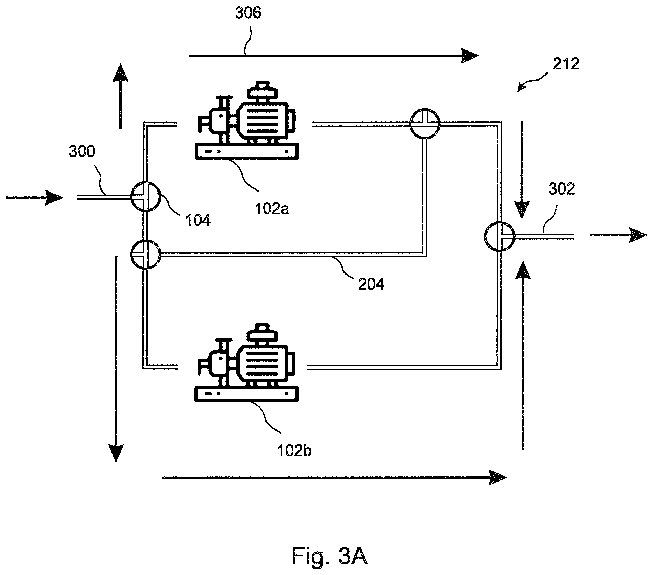

With reference to Figs. 2 and 3A, the invention comprises a plurality, or "cluster" **212,** of variable speed HRMs **102, 202** having operating speeds that are independently controlled **206** by an HRM controller **200.** The HRMs **102, 202** in the cluster **212** are interconnected with each other by an HRM plumbing system **204** that includes an inlet **300,** an outlet **302,** and one or more valves **104** that can be actuated by the HRM controller **200** to configure a flow path **306** through which a process fluid flows from the inlet **300** to the outlet **302** via one or more of the HRMs **102, 202** in the cluster **212.** By actively selecting which of the HRMs **102, 202** are included in the flow path **306,** the interconnections therebetween, and the operating speeds thereof, the HRM controller **200** is able to ensure that the HRM cluster **212** continues to operate at optimal efficiency as the COS fluctuates over a very wide range.

Figs. 3A - 3B illustrate a very simple example of a hypothetical HRM cluster **212** comprising two identical, variable speed pumps **102a, 102b,** where the HRM cluster **212** is used to store energy resulting from excess capacity of a green energy source by pumping water into a storage compressor, thereby compressing a gas that is contained within the storage container (not shown). In this hypothetical example, the operating speed of each of the pumps **102a, 102b** can be varied so as to maintain optimal hydraulic efficiency when the volumetric flow rate through the pump **102a, 102b** is between 51 and 85 m³/h (30 and 50 cubic feet per minute (cfm)), and the output pressure is between 0 and 2,75 bar (0 and 40 psi) higher than the input pressure. As the process begins, the HRM controller **200** has the option of either bypassing one of the pumps **102b** and adjusting the speed of the other pump **102a** to deliver gas to the storage container at 51-85 m³/h (30-50 cfm). Fig. 3A illustrates the other possibility, which is to cause the valves **104** to interconnect the two pumps **102a, 102b** in a parallel configuration to deliver the gas to the storage container at a flow rate of 102-170 m³/h (60-100 cfm). The choice between these two options may depend, for example, on the amount of excess energy that is currently available from the green energy system.

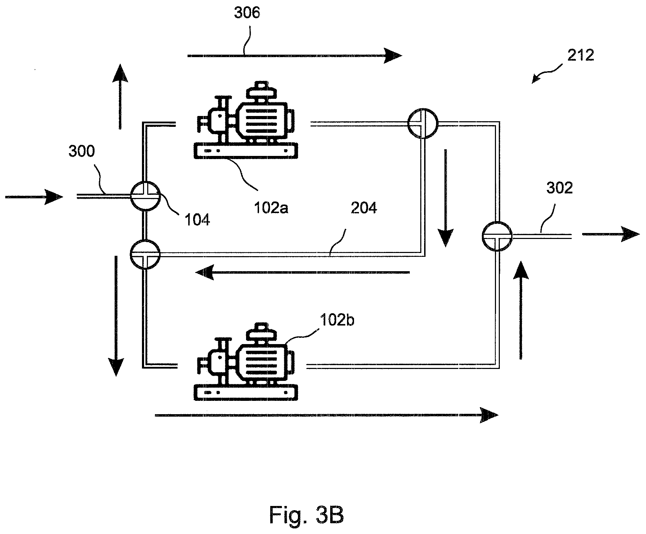

With reference to Fig. 3B, once the pressure in the storage container reaches 2,75 bar (40 psi), the HRM controller causes the valves **104** to reconfigure the pumps **102a, 102b,** into a series configuration, and adjusts their operating speeds such that they are each pumping between 51 and 85 m³/h (30 and 50 cfm) over a pressure differential of 1,37 bar (20 psi) per pump. As the pressure within the storage container continues to rise above 2,75 bar (40 psi), the operating speeds of the two pumps **102a, 102b** are varied so as to maintain optimum energy efficiency. In the series configuration of Fig. 3B, by controlling the operating speeds of the pumps, optimal efficiency of the HRM cluster **212** can be maintained up to a maximum of 2,75 bar (40 psi) per pump, i.e. 5,5 bar (80 psi) total.

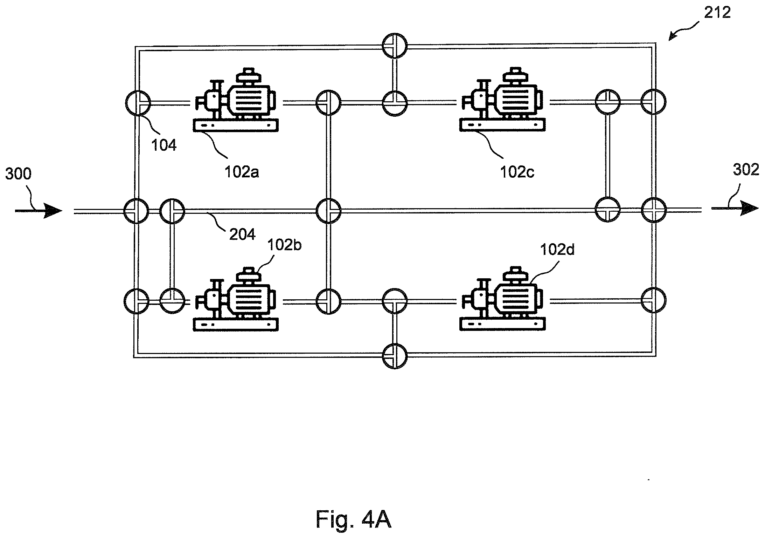

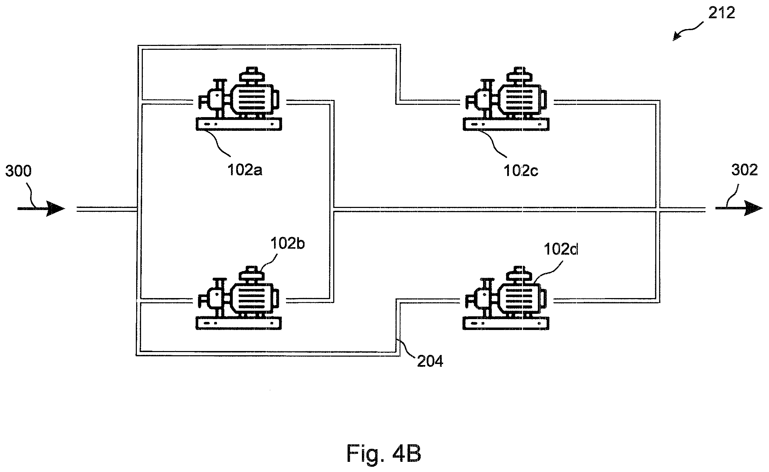

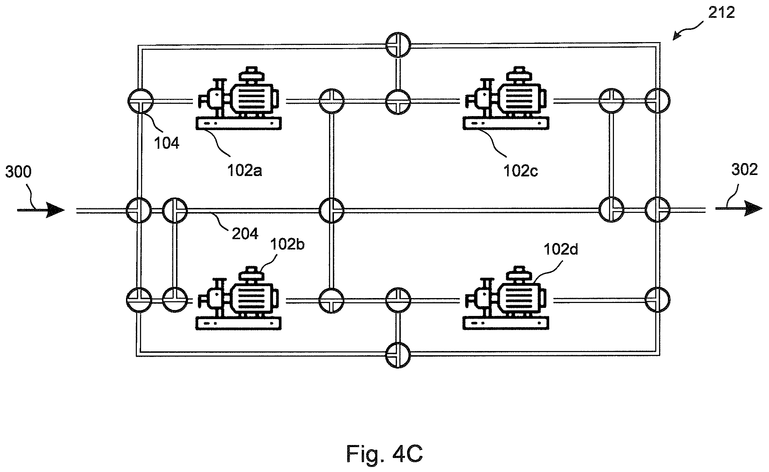

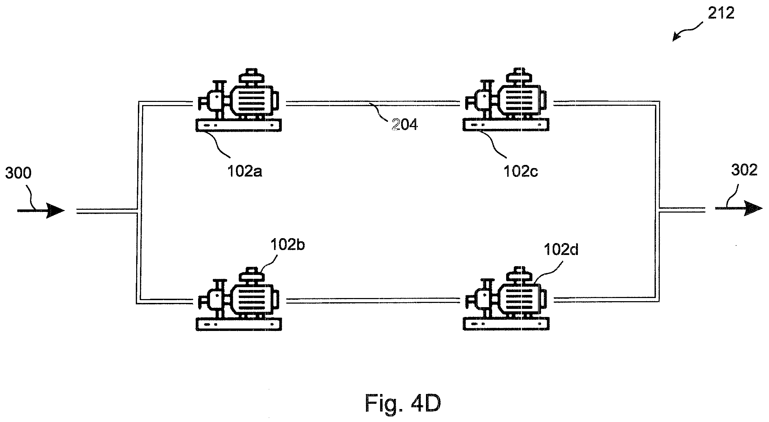

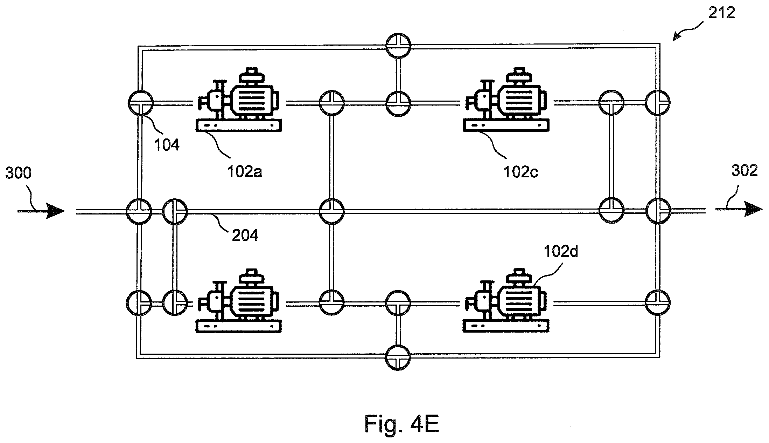

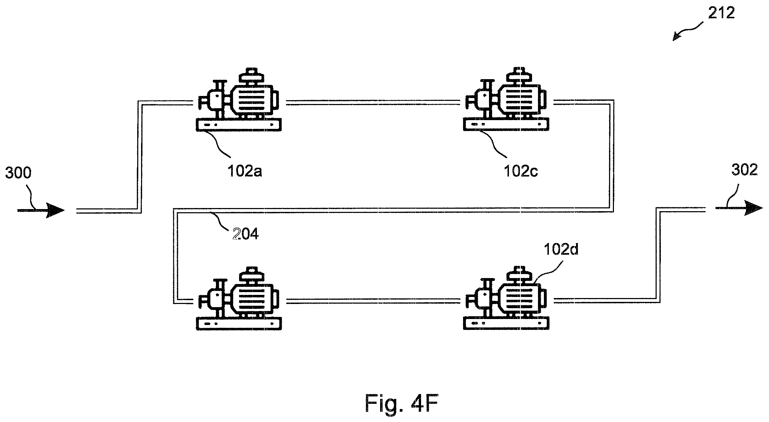

This approach can be extended to clusters of more than two pumps so as to cover even wider COS ranges as needed. For example, with reference to Figs. 4A - 4B, a cluster **212** that includes four identical pumps **102a, 102b, 102c, 102d** (collectively **102)** as described above could be configured by an HRM controller **200** to be entirely in parallel for container pressures up to 2,75 bar (40 psi), as illustrated by Fig. 4A. The flow path for this configuration is illustrated by Fig. 4B. As the pressure differential varies from 2,75 to 5,5 bar (40 to 80 psi), the controller **200** can then cause the valves **104** in the HRM plumbing system to reconfigure the pumps **102** into a series/parallel arrangement, as illustrated in Fig. 4C. The flow path **204** for this configuration is illustrated in Fig. 4D. Once the pressure differential rises above 5,5 bar (80 psi), the controller **200** can configure the pumps **200** so that they are all in series, thereby enabling the cluster **212** to continue operating at optimum efficiency for pressure differentials from 5,5 to 11 bar (80 to 160 psi). According to this simple example, by varying both the operating speeds of the pumps and the interconnections between the pumps, the controller **200** is able to ensure that each of the pumps continues to operate at or near its BEP over this entire range. In the same way, this approach can be extended to clusters that include any combination of pumps, turbines, and/or hybrid pump/turbine HRMs ("hybrid" HRMs).

In some embodiments, the cluster **212** includes only one type of HRM, for example one type of pump **102** for clusters that are used only for pumping fluids, only one type of turbine **202** for clusters that are used only for generating turboelectric energy, or only one type of hybrid HRM for clusters that are used both for pumping fluids and for generating turboelectric energy. In similar embodiments, the cluster **212** includes a limited range of HRM types, such as a plurality of identical pumps **102** and a plurality of identical turbines **202.**

Limiting the number of different types of HRM that are included in a cluster **212** can simplify the support and maintenance of the cluster **212** and reduces costs, because only a relatively small inventory of "spare" HRMs is required to enable failed units in the cluster **212** to be quickly replaced. This modular approach also enables the cluster **212** to be readily expanded as need, simply by adding additional HRMs from inventory to the cluster **212,** with appropriate extensions to the HRM plumbing system **204** and to the controller **200,** thereby enabling the cluster **212** to be readily adapted to changing requirements of the process.

Other embodiments include clusters comprising a plurality of different types of pumps **102,** turbines **202,** and/or hybrid HRMs having different BEPs, as well as HRMs that can tolerate different gas fractions and/or solid/liquid ratios. This approach can reduce the number of HRMs that are required to enable the cluster **212** to maintain optimal energy efficiency over a wide range of COS. For example, if the process fluid is normally a liquid, but sometimes also includes gas and/or solids, then an HRM cluster **212** can include at least one pump **102** that is optimized for pumping a pure liquid and another pump **102** that is optimized for pumping a hybrid fluid that includes gas and/or solids mixed with a liquid.

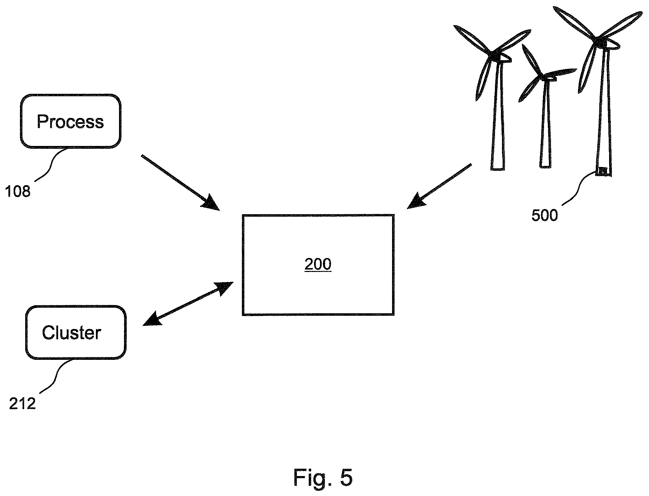

With reference to Fig. 5, the HRM controller **200** adjusts the HRM operating speeds and interconnections based upon information received from one or more information sources. The information can include, for example, the energy status at any given time of a green energy source such as a solar panel or wind turbine **500,** i.e. how much excess energy is available to be stored, or how much previously stored energy is currently needed. The information can also include sensed information regarding energy being consumed **214** by pumps **102** and/or generated **210** by turbines **202** in the cluster **212,** as well as information regarding the status of the process **108,** such as pressures, flow rates, mass flow rates, geodetic fluid levels, static and dynamic fluid levels, static and dynamic fluid energies, fluid temperatures, fluid densities, fluid phases (gas, liquified, supercritical, solidified), amounts of solids and/or suspensions present in the process fluid, gas fractions, and/or solid/liquid ratios, among others.

The HRM controller applies a process-dependent algorithm to this information so as to determine which of the HRMs in the cluster **212** should be included in the flow path, how they should be interconnected, and at what speed each of the HRMs should be operated, thereby ensuring that each of the HRMs in the flow path operates at or near its "best efficiency point" (BEP).

In embodiments, the HRM controller **200** also monitors **208** the health of the HRMs in the cluster **212,** for example by monitoring bearing temperatures, noise levels, vibrations, wear rates, and component deflections. The HRM controller is thereby able to predict when an HRM is nearing failure and should be repaired or replaced. Similarly, in various embodiments the HRM controller **200** monitors **208** the health of the overall process **108** with which the HRM cluster **200** is associated, for example detecting leaks and other problems by monitoring pressures, temperatures, and/or flow rates at various points in the process.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

Although the present application is shown in a limited number of forms, the scope of the invention is not limited to just these forms, but is amenable to various changes and modifications. The disclosure presented herein does not explicitly disclose all possible combinations of features that fall within the scope of the invention. The features disclosed herein for the various embodiments can generally be interchanged and combined into any combinations that are not self-contradictory without departing from the scope of the invention, defined in the claims. In particular,
the limitations presented in dependent claims below can be combined with their corresponding independent claims in any number and in any order without departing from the scope of the invention, unless the dependent claims are logically incompatible with each other.

## Claims

1. A hydraulic rotating machinery (HRM) system that is configured to control a process fluid of a process, said process fluid having widely varying conditions of service (COS), the HRM system comprising:
a controller (200);
an HRM cluster (212) comprising a plurality of HRMs (102, 202) having variable operating speeds, each of the HRMs (102, 202) being a pump (102), a turbine (202), or a hybrid pump/turbine, the operating speeds of the HRMs (102, 202) being controlled by the controller (200);
an HRM plumbing system (204), the HRMs (102, 202) being interconnectable by the HRM plumbing system (204) to form a flow path (306) through which the process fluid can flow from an inlet (300) of the HRM plumbing system (204) to an outlet (302) of the HRM plumbing system (204);
a plurality of valves (104) included in the HRM plumbing system (204), the controller (200) being able to actuate the valves (104) so as to control a selection of the HRMs (102, 202) that are included in the flow path (306) and an arrangement in which the HRMs (102, 202) of the selection are included in the flow path (306);
wherein the controller is further able to switch interconnections between four of the HRMs in the cluster such that, for all possible combinations of two selected HRMs of the four HRMs, the controller is able to actuate the valves so as to connect the two selected HRMs in series while the other two HRMs of the four HRMs are bypassed; and
non-transient media cooperative with the controller (200), the non-transient media containing instructions that, when executed by the controller (200), cause the controller (200) to:
accept information regarding at least one of a status of the process and the COS of the process fluid; and
according to said information, control the operating speeds of the HRMs (102, 202) and the selection and arrangement of the HRMs (102, 202) in the flow path (306) so as to continuously satisfy at least one requirement of the process while ensuring that the HRMs (102, 202) in the flow path (306) operate substantially at their optimal hydraulic efficiency points over said widely varying COS of the process fluid.

2. The HRM system of claim 1, wherein all of the HRMs (102, 202) in the plurality of HRMs (102, 202) are identical to each other.

3. The HRM system of any preceding claim, wherein the plurality of HRMs (102, 202) includes pumps (102) and turbines (202), all of the pumps (102) in the plurality of HRMs (102, 202) being identical to each other, and all of the turbines (202) in the plurality of HRMs (102, 202) being identical to each other.

4. The HRM system of any preceding claim, wherein the controller (200) is able to change the configuration of the flow path such that an interconnection of a pair of the HRMs (102, 202) in the flow path is changed between a parallel interconnection and a serial interconnection.

5. The HRM system of any preceding claim, wherein the controller (200) is able to change the configuration of the flow path such that an interconnection between four of the HRMs (102, 202) in the cluster (212) is changed between a fully parallel interconnection, a series-parallel interconnection, and a fully series interconnection.

6. The HRM system of any preceding claim, wherein the process is an energy generating process, and the HRM system is configured to store a surplus energy output of the process when the process is subject to a low energy demand, and to recover said stored energy and supply the recovered energy to the process when the process is subject to a high energy demand.

7. The HRM system of any preceding claim, wherein the cluster (212) includes at least one HRM that is configured for efficient operation upon a process fluid that is a mixture of a liquid and a gas.

8. The HRM system of any preceding claim, wherein the cluster (212) includes at least one HRM that is configured for efficient operation upon a process fluid that is a liquid mixed with solids.

9. The HRM system of any preceding claim except claim 2 or 3, wherein the cluster (212) includes a first pump (102) having first operating characteristics and a second pump (102) having second operating characteristics that are distinct from the first operating characteristics.

10. The HRM system of any preceding claim except claim 2 or 3, wherein the cluster (212) includes a first turbine (202) having first operating characteristics and a second turbine (202) having second operating characteristics that are distinct from the first operating characteristics.

11. The HRM system of any preceding claim except claim 2 or 3, wherein the cluster (212) includes a first hybrid pump/turbine having first operating characteristics and a second hybrid pump/turbine having second operating characteristics that are distinct from the first operating characteristics.

12. The HRM system of any preceding claim, wherein the information received by the controller (200) includes information pertaining to an operating health of an HRM in the cluster (212), and wherein the instructions, when executed by the controller (200), further cause the controller to predict a time until failure of the HRM.

13. A method of efficiently controlling a process fluid of a process, said process fluid having widely varying conditions of service (COS), the method comprising:
providing a controller (200);
providing a plurality of HRMs (102, 202) having variable operating speeds, each of the HRMs (102, 202) being a pump (102), a turbine (202), or a hybrid pump/turbine;
interconnecting the HRMs (102, 202) via an HRM plumbing system (204) to form an HRM cluster (212), the HRM plumbing system comprising a plurality of valves (104);
controlling of the valves (104) by the controller (200) so as to configure a flow path (306) through which the process fluid can flow from an inlet (300) of the HRM plumbing system (204) to an outlet (302) of the HRM plumbing system (204), said flow path comprising a selection of the HRMs (102, 202) of the cluster (212) arranged in an HRM arrangement, wherein the controller is further able to switch interconnections between four of the HRMs in the cluster such that, for all possible combinations of two selected HRMs of the four HRMs, the controller is able to actuate the valves so as to connect the two selected HRMs in series while the other two HRMs of the four HRMs are bypassed;
causing the process fluid to flow through the flow path (306);
receiving by the controller (200) of information regarding at least one of a status of the process and the COS of the process fluid; and
according to said information, controlling by the controller (200) of the operating speeds of the HRMs (102, 202) and the selection and arrangement of the HRMs (102, 202) in the flow path (306) so as to continuously satisfy at least one requirement of the process while ensuring that the HRMs (102, 202) in the flow path (306) operate substantially at their optimal hydraulic efficiency points over said widely varying COS of the process fluid.

## Patentansprüche

1. Hydraulisches Drehmaschinen (HRM)-System, das dafür ausgelegt ist, ein Prozessfluid eines Prozesses zu steuern, wobei das Prozessfluid weit unterschiedliche Einsatzbedingungen (COS) hat, wobei das HRM-System umfasst:
ein Steuergerät (200);
ein HRM-Cluster (212) umfassend eine Vielzahl von HRM (102, 202), die sich ändernde unterschiedliche Betriebsgeschwindigkeiten haben, wobei jede von den HRM (102, 202) eine Pumpe (102), eine Turbine (202) oder eine hybride Pumpe/Turbine ist, wobei die Betriebsgeschwindigkeiten der HRM (102, 202) vom Steuergerät (200) gesteuert werden;
ein HRM-Rohrleitungssystem (204), wobei die HRM (102, 202) vom HRM-Rohrleitungssystem (204) miteinander verbindbar sind, um einen Strömungsweg (306) zu bilden, durch welchen das Prozessfluid von einem Einlass (300) des HRM-Rohrleitungssystems (204) zu einem Auslass (302) des HRM-Rohrleitungssystems (204) strömen kann;
eine Vielzahl von Ventilen (104), die im HRM-Rohrleitungssystem (204) umfasst sind, wobei das Steuergerät (200) die Ventile (104) betätigen kann, um eine Auswahl der HRM (102, 202) zu steuern, die im Strömungsweg (306) umfasst sind, und eine Anordnung, in der die HRM (102, 202) der Auswahl im Strömungsweg (306) umfasst sind;
worin das Steuergerät ferner Verbindungen zwischen vier von den HRM im Cluster wechseln kann, so dass, für alle mögliche Kombinationen von zwei ausgewählten HRM von den vier HRM, das Steuergerät die Ventile betätigen kann, um die zwei ausgewählten HRM in Serie zu verbinden, während die anderen zwei HRM von den vier HRM umgangen werden; und
dauerhafte Medien, die mit dem Steuergerät (200) zusammenarbeiten, wobei die dauerhaften Medien Anweisungen enthalten, die, wenn sie vom Steuergerät (200) ausgeführt werden, bewirken, dass das Steuergerät (200):
Informationen akzeptiert, die zumindest einen von einem Zustand des Prozesses und den COS des Prozessfluids betreffen; und
gemäß diesen Informationen, die Betriebsgeschwindigkeiten der HRM (102, 202) und die Auswahl und Anordnung der HRM (102, 202) im Strömungsweg (306) so steuert, dass zumindest eine Anforderung des Prozesses kontinuierlich erfüllt wird, während es sichergestellt wird, dass die HRM (102, 202) im Strömungsweg (306) im Wesentlichen bei ihren optimalen hydraulischen Effizienzpunkten über den genannten weit unterschiedlichen COS des Prozessfluids arbeiten.

2. HRM-System nach Anspruch 1, worin alle HRM (102, 202) in der Vielzahl von den HRM (102, 202) miteinander identisch sind.

3. HRM-System nach einem der vorhergehenden Ansprüche, worin die Vielzahl von den HRM (102, 202) Pumpen (102) und Turbinen (202) umfasst, alle Pumpen (102) in der Vielzahl von den HRM (102, 202) miteinander identisch sind, und alle Turbinen (202) in der Vielzahl von den HRM (102, 202) miteinander identisch sind.

4. HRM-System nach einem der vorhergehenden Ansprüche, worin das Steuergerät (200) die Gestaltung des Strömungsweges derart ändern kann, dass eine Verbindung eines Paares der HRM (102, 202) im Strömungsweg zwischen einer parallelen Verbindung und einer seriellen Verbindung geändert wird.

5. HRM-System nach einem der vorhergehenden Ansprüche, worin das Steuergerät (200) die Gestaltung des Strömungsweges derart ändern kann, dass eine Verbindung zwischen vier von den HRM (102, 202) im Cluster (212) zwischen einer völlig parallelen Verbindung, einer seriell-parallelen Verbindung und einer völlig seriellen Verbindung geändert wird.

6. HRM-System nach einem der vorhergehenden Ansprüche, worin der Prozess ein energieerzeugender Prozess ist, und das HRM-System dafür ausgelegt ist, eine überschüssige Energieabgabe des Prozesses zu speichern, wenn der Prozess einem niedrigen Energiebedarf unterliegt, und die genannte gespeicherte Energie zurückzugewinnen und dem Prozess die zurückgewonnene Energie dann zu liefern, wenn der Prozess einem hohen Energiebedarf unterliegt.

7. HRM-System nach einem der vorhergehenden Ansprüche, worin das Cluster (212) zumindest eine HRM umfasst, die für einen effizienten Betrieb mit einem Prozessfluid ausgelegt ist, das ein Gemisch einer Flüssigkeit und eines Gases ist.

8. HRM-System nach einem der vorhergehenden Ansprüche, worin das Cluster (212) zumindest eine HRM umfasst, die für einen effizienten Betrieb mit einem Prozessfluid ausgelegt ist, das eine mit Feststoffen gemischte Flüssigkeit ist.

9. HRM-System nach einem der vorhergehenden Ansprüche mit Ausnahme von Anspruch 2 oder 3, worin das Cluster (212) eine erste Pumpe (102) mit ersten Betriebsmerkmalen und eine zweite Pumpe (102) mit zweiten Betriebsmerkmalen, die von den ersten Betriebsmerkmalen verschieden sind, umfasst.

10. HRM-System nach einem der vorhergehenden Ansprüche mit Ausnahme von Anspruch 2 oder 3, worin das Cluster (212) eine erste Turbine (202) mit ersten Betriebsmerkmalen und eine zweite Turbine (202) mit zweiten Betriebsmerkmalen, die von den ersten Betriebsmerkmalen verschieden sind, umfasst.

11. HRM-System nach einem der vorhergehenden Ansprüche mit Ausnahme von Anspruch 2 oder 3, worin das Cluster (212) eine erste hybride Pumpe/Turbine mit ersten Betriebsmerkmalen und eine zweite hybride Pumpe/Turbine mit zweiten Betriebsmerkmalen, die von den ersten Betriebsmerkmalen verschieden sind, umfasst.

12. HRM-System nach einem der vorhergehenden Ansprüche, worin die Informationen, die vom Steuergerät (200) empfangen werden, Informationen umfassen, die eine Betriebsgesundheit einer HRM im Cluster (212) betreffen, und worin die Anweisungen, wenn sie vom Steuergerät (200) ausgeführt werden, ferner bewirken, dass das Steuergerät eine Zeit bis zum Ausfall der HRM voraussagt.

13. Verfahren zum effizienten Steuern eines Prozessfluids eines Prozesses, wobei das Prozessfluid weit unterschiedliche Einsatzbedingungen (COS) hat, wobei das Verfahren umfasst:
Bereitstellen eines Steuergeräts (200);
Bereitstellen einer Vielzahl von HRM (102, 202), die sich ändernde unterschiedliche Betriebsgeschwindigkeiten haben, wobei jede von den HRM (102, 202) eine Pumpe (102), eine Turbine (202) oder eine hybride Pumpe/Turbine ist;
Verbinden der HRM (102, 202) miteinander über ein HRM-Rohrleitungssystem (204), um ein HRM-Cluster (212) zu bilden, wobei das HRM-Rohrleitungssystem eine Vielzahl von Ventilen (104) umfasst;
Steuern der Ventile (104) durch das Steuergerät (200), um einen Strömungsweg (306) zu gestalten, durch welchen das Prozessfluid von einem Einlass (300) des HRM-Rohrleitungssystems (204) zu einem Auslass (302) des HRM-Rohrleitungssystems (204) strömen kann, wobei der Strömungsweg eine Auswahl der HRM (102, 202) des Clusters (212) umfasst, die in einer HRM-Anordnung angeordnet sind, worin das Steuergerät ferner Verbindungen zwischen vier von den HRM im Cluster wechseln kann, so dass, für alle mögliche Kombinationen von zwei ausgewählten HRM von den vier HRM, das Steuergerät die Ventile betätigen kann, um die zwei ausgewählten HRM in Serie zu verbinden, während die anderen zwei HRM von den vier HRM umgangen werden;
Bewirken, dass das Prozessfluid durch den Strömungsweg (306) strömt;
Empfangen durch das Steuergerät (200) von Informationen, die zumindest einen von einem Zustand des Prozesses und den COS des Prozessfluids betreffen; und
gemäß diesen Informationen, Steuern durch das Steuergerät (200) der Betriebsgeschwindigkeiten der HRM (102, 202) und der Auswahl und Anordnung der HRM (102, 202) im Strömungsweg (306), so dass zumindest eine Anforderung des Prozesses kontinuierlich erfüllt wird, während es sichergestellt wird, dass die HRM (102, 202) im Strömungsweg (306) im Wesentlichen bei ihren optimalen hydraulischen Effizienzpunkten über den genannten weit unterschiedlichen COS des Prozessfluids arbeiten.

## Revendications

1. Système de machine rotative hydraulique (HRM) qui est configuré pour commander un fluide de processus d'un processus, ledit fluide de processus ayant des conditions de service (COS) très variables, le système HRM comprenant :
un dispositif de commande (200) ;
une grappe HRM (212) comprenant une pluralité de HRM (102, 202) ayant des vitesses de fonctionnement variables, chacune des HRM (102, 202) étant une pompe (102), une turbine (202) ou une pompe/turbine hybride, les vitesses de fonctionnement des HRM (102, 202) étant commandées par le dispositif de commande (200),
un système de plomberie HRM (204), les HRM (102, 202) pouvant être interconnectées par le système de plomberie HRM (204) pour former un trajet d'écoulement (306) à travers lequel le fluide de processus peut s'écouler d'une entrée (300) du système de plomberie HRM (204) à une sortie (302) du système de plomberie HRM (204) ;
une pluralité de vannes (104) comprises dans le système de plomberie HRM (204), le dispositif de commande (200) pouvant actionner les vannes (104) de manière à commander une sélection des HRM (102, 202) qui sont comprises dans le trajet d'écoulement (306) et un agencement dans lequel les HRM (102, 202) de la sélection sont comprises dans le trajet d'écoulement (306) ;
dans laquelle le dispositif de commande peut en outre commuter des interconnexions entre quatre des HRM dans la grappe de sorte que, pour toutes les combinaisons possibles de deux HRM sélectionnées des quatre HRM, le dispositif de commande peut actionner les vannes de manière à connecter les deux HRM sélectionnées en série tandis que les deux autres HRM des quatre HRM sont contournées ; et
un média non transitoire coopérant avec le dispositif de commande (200), le média non transitoire contenant des instructions qui, lorsqu'elles sont exécutées par le dispositif de commande (200), amènent le dispositif de commande (200) à :
accepter des informations concernant au moins l'un d'un état du processus et du COS du fluide de processus ; et
selon lesdites informations, commander les vitesses de fonctionnement des HRM (102, 202) et la sélection et l'agencement des HRM (102, 202) dans le trajet d'écoulement (306) de manière à satisfaire en continu au moins une exigence du processus tout en garantissant que les HRM (102, 202) dans le trajet d'écoulement (306) fonctionnent sensiblement à leurs points d'efficacité hydraulique optimaux sur ledit COS largement variable du fluide de processus.

2. Système HRM selon la revendication 1, dans lequel toutes les HRM (102, 202) dans la pluralité de HRM (102, 202) sont identiques les unes aux autres.

3. Système HRM selon l'une quelconque des revendications précédentes, dans lequel la pluralité de HRM (102, 202) comprend des pompes (102) et des turbines (202), toutes les pompes (102) dans la pluralité de HRM (102, 202) étant identiques les unes aux autres, et toutes les turbines (202) dans la pluralité de HRM (102, 202) étant identiques les unes aux autres.

4. Système HRM selon l'une quelconque des revendications précédentes, dans lequel le dispositif de commande (200) peut changer la configuration du trajet d'écoulement de telle sorte qu'une interconnexion d'une paire des HRM (102, 202) dans le trajet d'écoulement est changée entre une interconnexion parallèle et une interconnexion série.

5. Système HRM selon l'une quelconque des revendications précédentes, dans lequel le dispositif de commande (200) peut changer la configuration du trajet d'écoulement de telle sorte qu'une interconnexion entre quatre des HRM (102, 202) dans la grappe (212) est changée entre une interconnexion entièrement parallèle, une interconnexion série-parallèle et une interconnexion entièrement série.

6. Système HRM selon l'une quelconque des revendications précédentes, dans lequel le processus est un processus de génération d'énergie, et le système HRM est configuré pour stocker une sortie d'énergie excédentaire du processus lorsque le processus est soumis à une faible demande d'énergie, et pour récupérer ladite énergie stockée et fournir l'énergie récupérée au processus lorsque le processus est soumis à une forte demande d'énergie.

7. Système HRM selon l'une quelconque des revendications précédentes, dans lequel la grappe (212) comprend au moins un HRM qui est configuré pour un fonctionnement efficace sur un fluide de processus qui est un mélange d'un liquide et d'un gaz.

8. Système HRM selon l'une quelconque des revendications précédentes, dans lequel la grappe (212) comprend au moins une HRM qui est configurée pour un fonctionnement efficace sur un fluide de processus qui est un liquide mélangé à des solides.

9. Système HRM selon l'une quelconque des revendications précédentes, à l'exception de la revendication 2 ou 3, dans lequel la grappe (212) comprend une première pompe (102) ayant des premières caractéristiques de fonctionnement et une seconde pompe (102) ayant des secondes caractéristiques de fonctionnement qui sont distinctes des premières caractéristiques de fonctionnement.

10. Système HRM selon l'une quelconque des revendications précédentes, à l'exception de la revendication 2 ou 3, dans lequel la grappe (212) comprend une première turbine (202) ayant des premières caractéristiques de fonctionnement et une seconde turbine (202) ayant des secondes caractéristiques de fonctionnement qui sont distinctes des premières caractéristiques de fonctionnement.

11. Système HRM selon l'une quelconque des revendications précédentes, à l'exception de la revendication 2 ou 3, dans lequel la grappe (212) comprend une première pompe/turbine hybride ayant des premières caractéristiques de fonctionnement et une seconde pompe/turbine hybride ayant des secondes caractéristiques de fonctionnement qui sont distinctes des premières caractéristiques de fonctionnement.

12. Système HRM selon l'une quelconque des revendications précédentes, dans lequel les informations reçues par le dispositif de commande (200) comprennent des informations concernant un état de fonctionnement d'une HRM dans la grappe (212), et dans lequel les instructions, lorsqu'elles sont exécutées par le dispositif de commande (200), amènent en outre le dispositif de commande à prédire un temps jusqu'à la défaillance de la HRM.

13. Procédé de commande efficace d'un fluide de processus d'un processus, ledit fluide de processus ayant des conditions de service (COS) très variables, le procédé consistant à :
fournir un dispositif de commande (200) ;
fournir une pluralité de HRM (102, 202) ayant des vitesses de fonctionnement variables, chacune des HRM (102, 202) étant une pompe (102), une turbine (202) ou une pompe/turbine hybride ;
interconnecter les HRM (102, 202) par l'intermédiaire d'un système de plomberie HRM (204) pour former une grappe HRM (212), le système de plomberie HRM comprenant une pluralité de vannes (104) ;
commander des vannes (104) par le dispositif de commande (200) de manière à configurer un trajet d'écoulement (306) à travers lequel le fluide de processus peut s'écouler d'une entrée (300) du système de plomberie HRM (204) à une sortie (302) du système de plomberie HRM (204), ledit trajet d'écoulement comprenant une sélection des HRM (102, 202) de la grappe (212) disposées dans un agencement HRM, dans lequel le dispositif de commande peut en outre commuter des interconnexions entre quatre des HRM dans la grappe de sorte que, pour toutes les combinaisons possibles de deux HRM sélectionnées des quatre HRM, le dispositif de commande peut actionner les vannes de manière à connecter les deux HRM sélectionnées en série tandis que les deux autres HRM des quatre HRM sont contournées ;
amener le fluide de processus à s'écouler à travers le trajet d'écoulement (306) ;
recevoir par le dispositif de commande (200) des informations concernant au moins l'un d'un état du processus et du COS du fluide de processus ; et
selon lesdites informations, commander par le dispositif de commande (200) des vitesses de fonctionnement des HRM (102, 202) et la sélection et l'agencement des HRM (102, 202) dans le trajet d'écoulement (306) de manière à satisfaire en continu au moins une exigence du processus tout en garantissant que les HRM (102, 202) dans le trajet d'écoulement (306) fonctionnent sensiblement à leurs points d'efficacité hydraulique optimaux sur ledit COS largement variable du fluide de processus.
